Europäisches Patentamt

European Patent Office

Office européen des brevets

(11) Veröffentlichungsnummer: **0 234 546**
**B1**

(12) # EUROPÄISCHE PATENTSCHRIFT

(45) Veröffentlichungstag der Patentschrift:
28.02.90

(51) Int. Cl.⁴: **H01B 1/12,** H01M 4/60

(21) Anmeldenummer: **87102558.1**

(22) Anmeldetag: **24.02.87**

(54) **Folien aus elektrisch leitfähigen Polymeren.**

(30) Priorität: **27.02.86 DE 3606261**

(43) Veröffentlichungstag der Anmeldung:
**02.09.87 Patentblatt 87/36**

(45) Bekanntmachung des Hinweises auf die Patenterteilung:
**28.02.90 Patentblatt 90/9**

(84) Benannte Vertragsstaaten:
**BE DE FR GB NL**

(56) Entgegenhaltungen:
**DE-A- 3 346 935**

(73) Patentinhaber: **BASF Aktiengesellschaft,
Carl-Bosch-Strasse 38, D-6700 Ludwigshafen(DE)**

(72) Erfinder: **Muenstedt, Helmut, Dr., An dem Altenbach 41,
D-6706 Wachenheim(DE)**

## Beschreibung

Die Erfindung betrifft Folien aus elektrisch leitfähigen Polymeren sowie die Verwendung derartiger Folien als Elektrodenmaterial in elektrochemischen Zellen und derartige Folien enthaltende elektrochemische Zellen.

In den letzten Jahren hat die Verwendung elektrisch leitfähiger Polymerer als Elektrodenmaterial in Primär- und Sekundärelementen zunehmendes Interesse gefunden. So werden in der EP-A-36 118 elektrochemische Zellen beschrieben, in denen mindestens eine Elektrode aus elektrisch leitfähigen Polymeren besteht.

Die elektrisch leitfähigen Polymeren eignen sich besonders für den Einsatz in Sekundärelementen, und es konnte gezeigt werden, daß die Beladbarkeit und die Zyklisierbarkeit einiger Polymerer anwendungstechnisch interessante Werte erreichen (vgl. H. Münstedt in H. Kuzmany u.a., Electronic Properties of Polymers and Related Compounds, Springer-Verlag, 1985, S. 13).

Speziell für die Anwendung in Sekundärelementen ist es erforderlich, daß die elektrisch leitfähigen Polymere reversibel oxidiert werden können. Mit der elektrochemischen Oxidation oder Reduktion geht die reversible Einlagerung oder Auslagerung von Gegenionen in das elektrisch leitfähige Polymer einher. Allen leitfähigen Polymeren liegt jedoch generell der Nachteil zugrunde, daß ihre Leitfähigkeit mit abnehmenden Gehalt an Gegenionen bzw. Komplexierungsmitteln sinkt. Zum Erreichen eines hohen Entladungsgrades in einem Sekundärelement oder einer elektrochemischen Zelle ist jedoch eine möglichst vollständige Einlagerung bzw. Auslagerung, im Idealfall bis zum neutralen Zustand des Polymeren, notwendig. Die sehr geringe elektrische Leitfähigkeit der Polymeren im neutralen oder fast neutralen Zustand erfordert die Verwendung von speziellen Ableitern, in der Regel Metallen oder z.B. C-Fasern. Dies ist erforderlich, um eine für die Schnelligkeit des Ladungstransports ausreichende Leitfähigkeit und damit auch eine gute Leistungsdichte der elektrochemischen Zelle zu gewährleisten.

Mit der Anbringung spezieller Ableiter sind jedoch eine Reihe von Nachteilen verbunden. Viele Metalle zeigen in den verwendeten Elektrolyt-Lösungsmitteln Korrosionserscheinungen, oftmals macht auch die durchgehende flächenhafte Befestigung des Ableiters am polymeren Material der Folie Schwierigkeiten, und nicht zuletzt erfordert die Verwendung von Ableitern einen größeren konstruktiven Aufwand. Der letztgenannte Nachteil ist besonders bei einer Produktion in größeren Serien unerwünscht. Der Erfindung lag die Aufgabe zugrunde, Folien aus elektrisch leitfähigen Polymeren zur Verfügung zu stellen, die ohne die Verwendung eines speziellen Ableiters als Elektrodenmaterial in elektrochemischen Zellen verwendet werden können.

Erfindungsgemäß wird diese Aufgabe gelöst durch eine Folie aus elektrisch leitfähigen Polymeren, aufgebaut aus

A) einer einseitig mit einer wäßrigen Säure behandelten Schicht I mit eingelagerten Gegenionen, deren Dicke 1-60% der Gesamtdicke der Folie ausmacht, und

B) einer elektrochemisch reversibel oxidierbaren Schicht II, deren Dicke 40-99% der Gesamtdicke der Folie ausmacht.

Bevorzugte Folien gemäß der Erfindung sind den Unteransprüchen zu entnehmen.

In der beigefügten Zeichnung zeigen

Figur 1 einen Querschnitt durch eine erfindungsgemäße Folie und

Figur 2 eine schematische Darstellung einer elektrochemischen Zelle, die als Elektrode eine erfindungsgemäße Folie enthält.

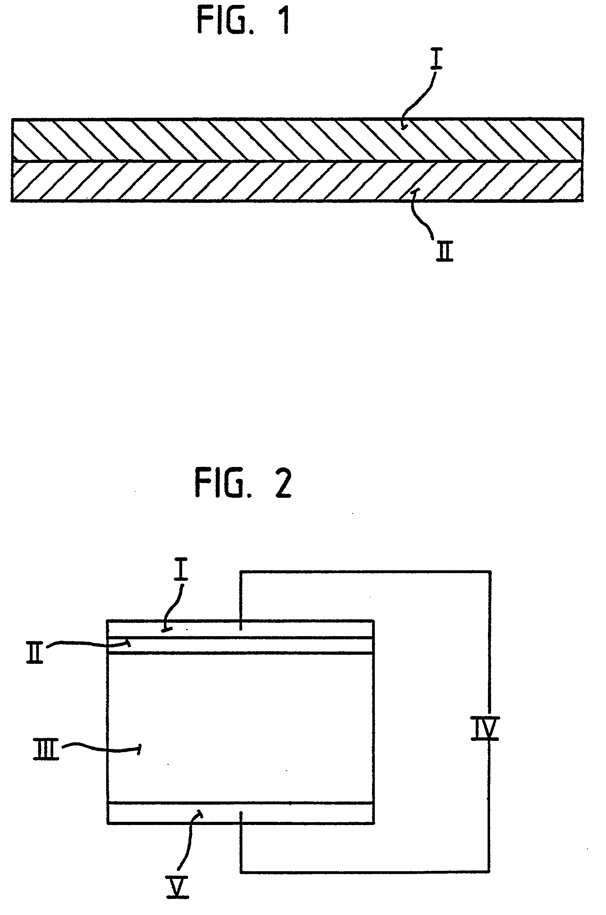

In Figur 1 sind die säurebehandelte Schicht I und die reversibel elektrochemisch oxidierbare Schicht II zu erkennen. Figur 2 zeigt, daß beim Einbau der erfindungsgemäßen Folien in eine elektrochemische Zelle die säurebehandelte Schicht I direkt in Kontakt mit der Gleichstromquelle IV bzw. dem Verbraucher IV und die Schicht II in direktem Kontakt mit dem Elektrolyten III steht. Das Bezugszeichen V bezeichnet die zweite Elektrode der elektrochemischen Zelle.

Die erfindungsgemäßen Folien zeichnen sich dadurch aus, daß sie entlang ihres Querschnitts einen säurebehandelten Bereich mit guter Leitfähigkeit und einen unbehandelten Bereich, dessen elektrische Leitfähigkeit vom Gehalt an Gegenionen abhängt, aufweisen

Aus der DE-OS 33 46 935 ist ein Verfahren zur Verbesserung der Stabilität der elektrischen Leitfähigkeit von Pyrrolpolymerisaten bekannt, welches dadurch gekennzeichnet ist, daß man die Polymerisate mit wäßrigen Säuren behandelt. Bei dieser Behandlung findet in Gegenionen enthaltenden Polymerisaten ein Ionenaustausch statt; im Falle der Einwirkung von Schwefelsäure wird das eingelagerte Komplexierungsmittel (Gegenion) des elektrisch leitfähigen Polymeren durch das Anion der Schwefelsäure ($HSO_4^-$) ersetzt.

Setzt man eine derart behandelte Folie als Elektrodenmaterial in einer elektrochemischen Zelle mit einem wäßrigen Elektrolyten ein, so tritt das generelle Problem der abnehmenden Leitfähigkeit mit abnehmendem Gehalt an Gegenionen ein. Überraschenderweise läßt sich eine mit Säure behandelte Folie, bei der ein vollständiger Ionenaustausch erfolgt ist, in einem organischen Elektrolyt-Lösungsmittel nicht reversibel elektrochemisch entladen. Als Folge davon bleibt die Leitfähigkeit unvermindert erhalten. Gleichzeitig ist jedoch eine solche Folie allein als Elektrodenmaterial für reversible elektrochemische Zellen nicht geeignet.

Als Monomere für die Herstellung der elektrisch leitfähigen Polymeren eignen sich bevorzugt 5- oder 6-gliedrige Heterocyclen mit Sauerstoff, Stickstoff oder Schwefel als Heteroatomen und einem konjugierten π-Elektronensystem. Nur beispielsweise seien hier Furan, Thiophen oder Pyrrol sowie Derivate dieser Verbindungen genannt. Derartige elektrisch leitfähige Polymere und Verfahren zu ihrer Herstellung sind in der Literatur beschrieben, weshalb sich nähere Angaben hier erübrigen. Vorzugsweise können die Polymerfolien durch elektrochemische Polymerisation der Monomere in Gegenwart von Komplexierungsmitteln (Gegenionen) hergestellt werden. Sowohl Verfahren zur elektrochemischen Polymerisation als auch geeignete Komplexierungsmittel sind in der Literatur beschrieben (vgl. DE-OS 34 28 843 und DE-OS 33 28 636). Neben den vorstehend genannten Monomeren eignen sich grundsätzlich alle Monomeren, die in elektrisch leitfähige Polymere überführt werden können, unter der Voraussetzung, daß die Polymeren ausreichend säurestabil sind. Nur stellvertretend seien hier Polymere des Anilins genannt.

Genauso ist es natürlich möglich, die Polymeren in Lösung in Gegenwart geeigneter Katalysatoren und gegebenenfalls Oxidations- bzw. Reduktionsmitteln herzustellen, wobei vorteilhaft wiederum Komplexierungsmittel bei der Polymerisation anwesend sind.

Es ist grundsätzlich auch möglich, erfindungsgemäße Folien aus elektrisch leitfähigen Polymeren aus gegenionenfreien Polymerisaten herzustellen. In diesem Fall werden bei der Säurebehandlung lediglich die Anionen der verwendeten Säuren in das Polymer eingelagert, ohne daß ein Ionenaustausch erfolgt.

Die Herstellung der säurebehandelten Schicht der erfindungsgemäßen Folien erfolgt nun durch Behandlung einer Seite bzw. einer Oberfläche der Folien mit wäßrigen Säuren, wie dies z.B. in der DE-OS 33 46 935 beschrieben wird. Als Säuren haben sich insbesondere wäßrige Schwefelsäure oder Salzsäure bewährt, deren pH-Wert vorzugsweise unter 4 liegen sollte. Die Konzentration der verwendeten Säuren liegt im allgemeinen im Bereich von 0,1 bis 50 Gew.%, vorzugsweise von 0,2 bis 25 Gew.%, insbesondere 0,2 bis 10 Gew.%. Neben Schwefelsäure und Salzsäure eignen sich auch andere verdünnte Säuren, wie z.B. Phosphorsäure, Essigsäure und Trichloressigsäure, um nur einige zu nennen, solange der pH-Wert der verdünnten Lösungen unter 4 liegt. Nach den bisherigen Erkenntnissen ist es wesentlich, daß zur Behandlung wäßrige Säuren eingesetzt werden; bei Verwendung von wasserfreien, konzentrierten Säuren sind die vorteilhaften Eigenschaften der Folien weniger ausgeprägt. Gegebenenfalls können die Säuren auch noch organische Lösungsmittel enthalten. Der Wassergehalt der Säuren beträgt vorzugsweise mindestens 50 %, insbesondere mindestens 90 %.

Wie bereits erwähnt, findet durch diese Behandlung mit Säure ein Austausch des im Polymeren eingelagerten Komplexierungsmittels bzw. Gegenions gegen das Anion der verwendeten Säure, bei der Verwendung von Schwefelsäure also z.B. $HSO_4^-$, statt. Die Eindringtiefe und damit die Dicke (Stärke) des säurebehandelten Bereichs kann sowohl durch die Säurekonzentration als auch über die Behandlungszeit kontrolliert werden. Es versteht sich von selbst, daß diese beiden Größen voneinander abhängig sind und zur Erzielung einer gewünschten Dicke der behandelten Schicht bzw. Eindringtiefe eine geeignete Kombination gewählt werden muß. Im allgemeinen reichen Behandlungszeiten von 1 bis 30 min bei einer Säurekonzentration von 0,1 bis 50 Gew.% aus, um säurebehandelte Schichten mit einer Dicke von 2 bis 20 µm zu erzielen, d.h. eine 1gew.%ige Säure führt bei einer Behandlung von 1 min. zu einer Schichtdicke der säurebehandelten Schicht von etwa 1 µm. Selbstverständlich ist die Eindringtiefe bei gegebener Säurekonzentration und Behandlungszeit auch von der Temperatur, den physikalischen Bedingungen und der Art der verwendeten Säure abhängig. Nur beispielsweise seien als physikalische Bedingungen, die die Eindringtiefe beeinflussen, die Luftfeuchtigkeit im System und eventuell vorhandene weitere Komponenten genannt.

Die Dicke (Stärke) der säurebehandelten Schicht beträgt von 1 bis 60%, insbesondere von 2 bis 10% der Gesamtdicke der eingesetzten Folie aus lektrisch leitfähigen Polymeren. In Verbindung mit den üblichen Folienstärken im Bereich von 10 bis 150 µm entspricht dies Dicken der säurebehandelten Bereiche von vorzugsweise 0,1 bis 90 µm, insbesondere von 1 bis 15 µm.

Die erfindungsgemäßen Folien lassen sich besonders vorteilhaft als Elektrodenmaterialien in elektrochemischen Zellen verwenden. Aufbauend auf dem Effekt der elektrochemischen Irreversibilität der behandelten Bereiche, können Elektroden hergestellt werden, bei denen der flächenhafte Ableiter direkt ein Bestandteil der Folie ist. Man verbindet nämlich die säurebehandelte Seite I der Folie direkt mit einer Spannungsquelle, während die nicht behandelte Fläche II unmittelbar mit dem verwendeten Elektrolyt-Lösungsmittel in Kontakt steht. Die mit dem Elektrolyt-Lösungsmittel in direktem Kontakt stehende Oberfläche läßt sich elektrochemisch reversibel be- und entladen, d.h. es ist eine reversible Einund Auslagerung der beweglichen Gegenionen möglich. Der mit der Säure behandelte Teil der Folie bleibt unabhängig von den ablaufenden elektrochemischen Vorgängen im nicht säurebehandelten Bereich der Folie gut elektrisch leitfähig, da keine Ein- und Auslagerung von Säureanionen erfolgt. Es ist wesentlich, darauf hinzuweisen, daß die Irreversibilität der Entladbarkeit nur in organischen Elektrolyt-Lösungsmitteln vollständig gegeben ist; in wäßrigen Elektrolyten bzw. Elektrolyt-Lösungsmitteln mit hohem Wassergehalt lassen sich auch säurebehandelte Schichten be- und entladen, so daß hier die vorteilhaften Effekte der erfindungsgemäßen Folien nicht so ausgeprägt gegeben sind.

Die erfindungsgemäßen Folien aus elektrisch leitfähigen Polymeren lassen sich demgemäß als Elektroden mit direkt integriertem flächenhaftem Ableiter in elektrochemischen Zellen mit organischem Elektrolyten einsetzen. Die vom elektrochemischen Beladungszustand unabhängige elektrische Leitfähigkeit der säurebehandelten Schicht ist ausreichend hoch, um eine schnelle Be- und Entladbarkeit, d.h. eine zufriedenstellende Leistungsdichte der elektrochemischen Zelle zu erreichen. Da das reversibel oxidierbare Material und der integrierte Ableiter lediglich zwei Teile ein und derselben Folie sind, ist sowohl eine i       nnige Befestigung (Kontaktierung) als auch eine ausgezeichnete mechanische Haftung gewährleistet. Hinzu kommt, daß die bei der Verwendung von Metallen als Ableiter auftretenden Korrosionsprobleme ebenfalls nicht gegeben sind.

Darüber hinaus ist auch die Herstellung derartiger Elektroden in Großserien wesentlich einfacher, da sowohl eine Komponente, nämlich der Ableiter, als auch ein Verfahrensschritt, nämlich die flächenhafte Kontaktierung des Ableiters mit dem aktiven Elektrodenmaterial entfällt.

Je nach Ausführungsform können beide Elektroden einer elektrochemischen Zelle oder nur eine der Elektroden aus den erfindungsgemäßen Folien aufgebaut sein. Als Gegenelektrode eignen sich die üblicherweise verwendeten Alkalimetallelektroden oder auch C-Fasern, wie sie an sich bekannt sind.

Neben der Verwendung als aktives Elektrodenmaterial in elektrochemischen Zellen kann die unterschiedliche Leitfähigkeit der erfindungsgemäßen Folien, die durch den Aufbau aus zwei Bereichen hervorgerufen wird, auch zu anderen Zwecken ausgenutzt werden. Nur beispielsweise seien hier Schichtelemente aus Dielektrikum mit integriertem Ableiter genannt. Entlädt man den reversiblen be- und entladbaren Teil einer erfindungsgemäßen Folie, so besitzt dieser als Isolator eine hohe Dielektrizitätskonstante, während der mit Säure behandelte Teil eine vergleichsweise hohe Leitfähigkeit aufweist.

Beispiel 1

Eine 25 μm dicke, mit Phenylsulfonat komplexierte Polypyrrolfolie mit einer elektrischen Leitfähigkeit von 100 S/cm wurde in 10 gew.%ige wäßrige Schwefelsäure eingetaucht. Nach zehnminütiger Behandlungsdauer war die Leitfähigkeit auf etwa 110 S/cm gestiegen. In eine elektrochemische Zelle eingebaut war im Gegensatz zur unbehandelten Folie keine Entladung möglich.

Beispiel 2

Die Polypyrrolfolie aus Beispiel 1 wurde nur auf einer Seite mit 10 gew.%iger wäßriger Schwefelsäure behandelt. Die Leitfähigkeit der Folie war danach unverändert. Mit einem Platindraht als Ableiter wurde diese Elektrode in eine elektrochemische Zelle mit Lithium als Gegenelektrode und Propylencarbonat/LiClO$_4$ als Elektrolyten eingebaut, durch Anlegen einer entsprechenden Potentialdifferenz ließ sich die Polypyrrolfolie entladen. Der anschließende Ladevorgang besaß eine Kinetik, die der einer flächenhaft mit Platinblech kontaktierten Folie ähnlich ist.

Beispiel 3

Eine mit ClO$_4^-$ komplexierte Polypyrrolfolie der Dicke 50 μm wurde auf einer Seite einer 10 gew.%igen wäßrigen Schwefelsäure ausgesetzt. Nach fünfminütiger Einwirkzeit war in einer Schicht von ungefähr 5 μm das Anion ClO$_4^-$ nahezu vollständig gegen HSO$_4^-$ ausgetauscht, wie Untersuchungen mit energiedispersiver Röntgenanalyse zeigten. Die auf diese Weise behandelte Folie besaß ein der in Beispiel 2 beschriebenen Elektrode vergleichbares Verhalten.

Patentansprüche

1. Folie aus elektrisch leitfähigen Polymeren, aufgebaut aus

A) einer einseitig mit einer wäßrigen Säure behandelten Schicht I mit eingelagerten Gegenionen, deren Dicke 1-60% der Gesamtdicke der Folie ausmacht, und

B) einer elektrochemisch reversibel oxidierbaren Schicht II, deren Dicke 40-99% der Gesamtdicke der Folie ausmacht.

2. Folie nach Anspruch 1, dadurch gekennzeichnet, daß die Dicke der Schicht I 2 bis 10% der Gesamtdicke der Folie beträgt.

3. Folie nach den Ansprüchen 1 und 2, dadurch gekennzeichnet, daß das elektrisch leitfähige Polymere ein Polymeres des Pyrrols, Furans, Thiophens oder Anilins ist.

4. Verwendung der Folie gemäß den Ansprüchen 1 bis 3 als Elektrodenmaterial in elektrochemischen Zellen.

5. Elektrochemische Zelle, enthaltend eine Folie gemäß den Ansprüchen 1 bis 3 als Elektrodenmaterial und ein organisches Elektrolyt-Lösungsmittel.

6. Verfahren zur Herstellung von Folien gemäß den Ansprüchen 1 bis 3, dadurch gekennzeichnet, daß man Folien aus elektrisch leitfähigen Polymeren einseitig mit wäßrigen Säuren behandelt.

Claims

1. A film of an electrically conductive polymer consisting of

a) a layer I which is treated on one side with an aqueous acid and contains incorporated counterions and whose thickness is 1–60% of the total thickness of the film, and

b) an electrochemically reversibly oxidizable layer II whose thickness is 40–99% of the total thickness of the film.

2. A film as claimed in claim 1, wherein the thickness of the layer I is from 2 to 10% of the total thickness of the film.

3. A film as claimed in claims 1 and 2, wherein the electrically conductive polymer is a polymer of pyrrole, of furan, of thiophene or of aniline.

4. Use of the film as claimed in any of claims 1 to 3 as elctrode material in an electrochemical cell.

5. An electrochemical cell containing a film as claimed in any of claims 1 to 3 as electrode material and an organic electrolyte solvent.

6. A process for the preparation of a film as claimed in any of claims 1 to 3, wherein a film of an electrically conductive polymer is treated on one side with an aqueous acid.

## Revendications

1. Feuille en polymères conducteurs de l'électricité, constituée de

a) une couche I contenant des contre-ions, traitée d'un côté avec un acide aqueux, dont l'épaisseur représente entre 1 et 60% de l'épaisseur totale de la feuille, et

b) une couche II, pouvant être oxydée de façon réversible par voie électro-chimique, dont l'épaisseur représente entre 40 et 99% de l'épaisseur totale de la feuille.

2. Feuille suivant la revendication 1, caractérisée en ce que l'épaisseur de la couche I représente entre 2 et 20% de l'épaisseur totale de la feuille.

3. Feuille suivant les revendications 1 et 2, caractérisée en ce que le polymère conducteur de l'électricité est un polymère du pyrrole, du furanne, du thiophène ou de l'aniline.

4. Utilisation d'une feuille suivant les revendications 1 à 3 comme matériau pour électrodes pour cellules électro-chimiques.

5. Cellule électro-chimique, contenant comme matériau pour électrodes une feuille suivant les revendications 1 à 3 et une solution organique comme électrolyte.

6. Procédé de fabrication de feuilles suivant les revendications 1 à 3, caractérisé en ce que l'on traite des feuilles en un polymère conducteur de l'électricité sur une face avec un acide aqueux.

# FIG. 1

# FIG. 2